# EUROPEAN PATENT APPLICATION

(11) **EP 4 300 492 A1**
(43) Date of publication of application: **03.01.2024**
(21) Application number: 22189661.6
(22) Date of filing: 10.08.2022
(51) Int. Cl.: G10L 21/0208, H04M 3/56, G10L 17/00

(54) **METHOD OF NOISE REDUCTION FOR INTELLIGENT NETWORK COMMUNICATION**

(30) Priority: 01.07.2022 TW 111100798
(71) Applicant: Decentralized Biotechnology Intelligence Co., Ltd., Taipei City, Da'an Dist. 106021 (TW)
(72) Inventor: Chou, Yao-Sheng, 106021 Taipei (TW); Lin, Hsiao-Yi, 106021 Taipei (TW); Chou, Yen-Han, 106021 Taipei (TW)
(74) Representative: Zaboliene, Reda

(57) **Abstract**

The present invention discloses a method of noise reduction for an intelligent network communication, which includes the following steps: first, receiving a local sound message through a sound receiver of a communication device at the transmitting end. Next, a voice recognizer is used to identify the voice characteristics of the speaker; then, it is determined from a voice database whether there is a corresponding or similar voice characteristic of the speaker recognized by the voice recognizer. Finally, filtering other signals other than the voice characteristic signal of the speaker through a sound filter to obtain the original sound emitted by the speaker.

## Description

### TECHNICAL FIELD

The present invention relates to a noise reduction, more specifically, a method of noise reduction for an intelligent network communication.

### BACKGROUND

Conventional technologies of background noise cancellation are mostly used in telephone communication or headphones. The main purpose of these technologies is to prevent the impact of background noise or ambient noise on communication quality or sound quality of headphone. At present, most of the common technologies of background noise cancellation used by intelligent devices based on voice interaction are derived from the existing technologies of traditional telephone communication. These technologies include spectral subtraction, Wiener filtering and adaptive noise cancellation.

The method of spectral subtraction is to use the mean value of amplitude of speech segmentation to subtract the amplitude of non-speech segmentation to obtain the mean value of noise, and then eliminate the noise. This method has a poor effect for unsteady noise, which is easy to cause speech distortion by noise elimination, and resulting in the decline of speech recognition rate.

The method of Wiener filtering uses the transfer function of Wiener filter to convolute the mean value of noise amplitude with the amplitude of speech segmentation to obtain the amplitude information of signal by noise elimination. It does not cause serious speech distortion in Wiener filtering method, and can effectively suppress the noise with small change range or stable in the environment. However, this method estimates the mean value of noise by calculating the statistical average of the power spectrum of noise during the silent period. This estimation is based on the premise that the power spectrum of noise does not change much before and after the sound producing. Therefore, in the case of unsteady noise with large changes, this method cannot achieve higher noise reduction performance.

Another cancellation method of ambient noise commonly used in smart devices is adaptive noise cancellation method by a directional microphone. This method uses an omnidirectional microphone to collect ambient noise, a directional microphone to collect user voice, and then adaptive noise cancellation is performed for the two signals to obtain pure voice signals.

In addition, remote video conferencing is more popular at present. When conducting one-way or multi-party meetings, the common problem is that the volume of sound sources varies from place to place, and thereby resulting in poor quality of output sound from the main meeting venue. Often, the volume can only be self-adjusted by other places to match the volume of the main meeting venue. This not only delays the setting time, but also makes the meeting unable to proceed smoothly. Moreover, in most video conferences, the receiver often receives echo back, which will not only interfere with the sender, but also affect the audio message of the receiver. This echo is the most common noise, especially in small rooms, where the echo is the largest. In order to achieve a good suppression of echo and noise, the present invention has been developed.

### SUMMARY OF THE INVENTION

Based on the above-mentioned, the method of noise reduction for intelligent network communication has become an important work in many fields. For example, a database of voice characteristics, models or features of conference participants is established to facilitate the improvement of the quality and effect of sound receiving, so as to achieve the purpose of the present invention.

The purpose of the present invention is to provide a video conference system with anti-echo function for improving the audio quality and effect of the video conference.

According to one aspect of the present invention, the reverse phase noise in the transceiver devices of the conference participants may be created when the voice pauses. Based on the principle of destructive interference, the sound interval method can achieve a great effect to filter out the background noise. It should be understood that the reverse phase noise can completely offset (counterbalance) the noise of the noise source, and can also partially offset the noise of the noise source.

According to another aspect of the present invention, a method of noise reduction for an intelligent network communication is provided, which comprises the following steps. First, a first local sound message is received by a voice receiver of a communication device at a transmitting end, wherein the first sound message includes a voice emitted by a speaker. Then, voice characteristics of the speaker is captured by a voice recognizer. Next, a second local sound message is received by the voice receiver, wherein the second local sound message includes the voice of the speaker. In the following step, the second local sound message is compared with the voice characteristics of the speaker by a control device. Finally, all signals except the voice characteristic of the speaker in the second local sound message is filtered by a voice filter to obtain an original voice emitted by the speaker.

According to one aspect of the present invention, the voice characteristics of the speaker are stored in a voice database, and the voice characteristics of the speaker comprises voice frequency, timbre and accent. After the filtering process is finished, a voice signal from the speaker is transmitted to a second communication device at a receiving end through a wireless transmission device and/or a network transmission device, and the voice signal from the speaker in the second communication device at the receiving end is produced.

According to another aspect of the present invention, a method of noise reduction for an intelligent network communication is provided, which comprises the following steps. First, a first local sound message is received by a voice receiver of a first communication device at a transmitting end, wherein the first sound message includes a voice emitted by a speaker. Then, the first local sound message is transmitted by a wireless transmission device and/or a network transmission device to a second communication device at a receiving end. Next, voice characteristics of the speaker are captured by a voice recognizer of the second communication device at the receiving end. Subsequently, a second local sound message is received by the second communication device, wherein the second local sound message includes the voice of the speaker. In the following step, the second local sound message is compared with the voice characteristics of the speaker by a control device of the second communication device. Finally, all signals except the voice characteristic of the speaker in the second local sound message is filtered by a voice filter of the second communication device to obtain an original voice emitted by the speaker.

According to yet another aspect of the present invention, a method of noise reduction for an intelligent network communication is provided, which comprises the following steps. First, a local ambient noise is received by a voice receiver of a communication device at a transmitting end. Then, a waveform of the ambient noise received through the voice receiver is identified by a voice recognizer. Next, an energy level of the ambient noise is determined by a control device to obtain a sound interval. Subsequently, a local sound message is received by the voice receiver of the communication device at the transmitting end after obtaining the sound interval. Finally, waveform signal of the ambient noise is filtered by a voice filter to obtain an original sound emitted by the speaker.

According to an aspect of the present invention, after the filtering process is finished, a voice signal from the speaker is transmitted to a second communication device at a receiving end through a wireless transmission device and/or a network transmission device, and the voice signal from the speaker in the second communication device at the receiving end is produced.

According to another aspect of the present invention, a computer program/algorithm is used to determine based on a voice database whether there is a corresponding or similar voice characteristic of the speaker recognized by the voice recognizer.

### BRIEF DESCRIPTION OF THE DRAWINGS

The components, characteristics and advantages of the present invention may be understood by the detailed descriptions of the preferred embodiments outlined in the specification and the drawings attached:
Figure 1 shows a functional block diagram of a communication device according to one embodiment of the present invention;
Figure 2 shows a schematic diagram of the audio processing architecture of the voice recognizer;
Figure 3 illustrates a schematic diagram of a communication system according to an embodiment of the present invention;
Figure 4 shows a flow diagram of a method of noise reduction for intelligent network communication according to an embodiment of the present invention;
Figure 5 shows a flow diagram of a method of noise reduction for intelligent network communication according to another embodiment of the present invention;
Figure 6 illustrates a flow diagram of a method of noise reduction for intelligent network communication according to yet another embodiment of the present invention.

### DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims.

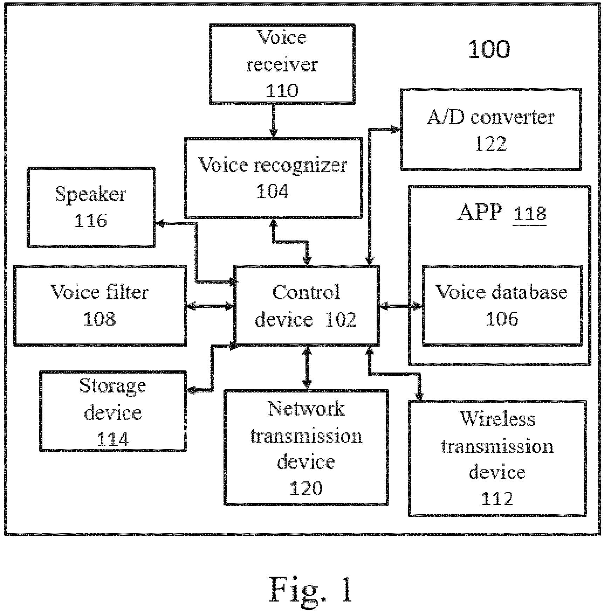

As shown in Fig. 1, it is a functional block diagram of a communication device according to one embodiment of the present invention. In the present embodiment, the communication device 100 is capable of receiving or transmitting vocal, video signal or data. For example, the communication device 100 may be a server, a computer, a notebook computer, a tablet computer, a smart phone and other portable devices. The communication device 100 includes a control device 102, a voice recognizer 104, a voice database 106, a voice filter 108, a voice receiver 110, a wireless transmission device 112, a storage device 114, a speaker 116, an APP 118, a network transmission device 120 and an analog-to-digital (A/D) converter 122. The control device 102 is coupled with the voice recognizer 104, the voice database 106, the voice filter 108, the voice receiver 110, the wireless transmission device 112, the storage device 114, the speaker 116, the APP 118, the network transmission device 120 and the analog-to-digital converter 122 to process or control the operations of these elements. In one embodiment, the control device 102 is a processor. The speaker 116 is, for example, a microphone. The voice recognizer 104 is coupled to the voice filter 108 and the voice receiver 110. The voice filter 108 is coupled to the speaker 116. The function of the voice filter 108 is to filter all received sounds except the preset voice characteristics (e.g., participants). That is, after the mixed sound is recognized by the voice recognizer 104, only the sounds conforming with the preset voice characteristics is retained and stored.

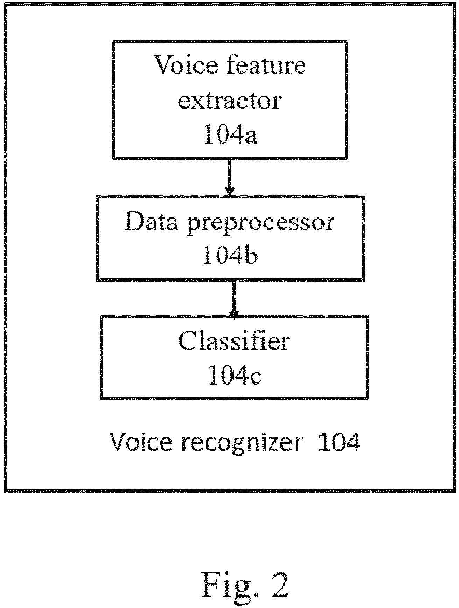

The voice recognizer 104 is used to recognize the features of sound and audio. As shown in Fig. 2, it is a schematic diagram of the audio processing architecture of the voice recognizer 104. The voice recognizer 104 includes a voice feature extractor 104a, a data preprocessor 104b and a classifier 104c. The voice feature extractor 104a is used to extract the audio signal, which uses a plurality of audio descriptors to extract a plurality of characteristic values from the audio signal. The voice feature extractor 104a can extract the characteristic values of the audio signal in the frequency domain, time domain and statistical value. Among them, the calculation methods used in processing the characteristics of the frequency domain include: linear predictive coding (LPC), Mel-scale frequency cepstral coefficients (MFCC), loudness, pitch, autocorrelation, audio spectrum centroid, audio spectrum spread, audio spectrum flatness, audio spectrum envelope, harmonic spectral centroid, harmonic spectral deviation, harmonic spectral spread and harmonic spectral variation. In addition, the calculation methods used in processing the characteristics of time domain include log attack time, temporal centroid and zero crossing rate. Furthermore, when dealing with statistical characteristics, the calculation methods include skewness and kurtosis. The data preprocessor 104b normalizes the characteristic values as the classification information of the voice recognizer 104. The classifier 104c classifies the audio signals into several different types of audio based on the classification information, and classifies the received audio signals by artificial neural networks, fuzzy neural networks, nearest neighbor rule and/or hidden Markov models.

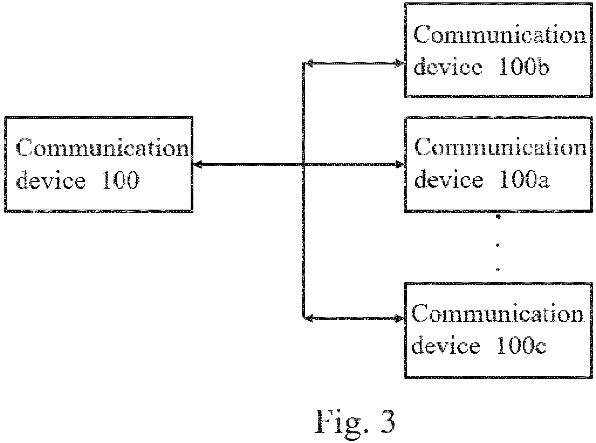

Please refer to Fig. 3, which shows a schematic diagram of a communication system according to an embodiment of the present invention. In this communication system, there are several communication devices 100, 100a, 100b, ..., 100c, which can be used for virtual one-party meeting or multi-party meeting. For example, these communication devices 100x, 100b, ..., 100c include the constituent components of the communication device 100 in Fig. 1. Each communication device may communicate with each other through the wireless transmission device 112 and/or the network transmission device 120. Taking the communication device 100 as an example, when a communication conference is held, the voice receiver 110 receives a local sound message, wherein the sound message includes the sound emitted by speakers, background noise or ambient noise, echo, etc. The voice database 106 stores the voice characteristics of the speakers participating in the meeting, including voice frequency, timbre, accent, and other voice models or characteristics of the speakers, which are used as a reference for subsequent recognition of the voice recognizer 104.

According to the above-mentioned, the voice recognizer 104 of the present invention is used for audio classification and recognize the voice characteristics including voice frequency, timbre, accent, and other voice models or characteristics of the speakers. Firstly, the speaker's voice signal is input, the audio characteristics are extracted by the feature extraction method. Then, the parameters of audio characteristics are normalized as the inputs of audio classification processing. Using these known inputs to train the recognition system, the audio characteristics of the speakers can be obtained after the training.

As shown in Fig. 3, a communication conference can be held among several communication devices 100, 100a, 100b, ..., 100c. In one embodiment, the voice receiver 110 of the communication device 100 at the transmitting end receives the first local sound message. The sound message includes the sound emitted by the speaker, background noise or ambient noise and echo. The voice receiver 110 is coupled to the voice database 106, so the voice characteristics of the speaker received by the voice receiver 110 can be retrieved through the voice recognizer 104.

Through the processing of the control device 102, the voice characteristics of the speakers are stored in a voice database 106. The voice database 106 stores the preset voice characteristics of the speakers. When the conference is initiated, the communication device 100 at the transmitting end receives a second local sound message including the voice of the speakers. Through the processing of the control device 102, the second local voice message is compared with the voice characteristics of the speakers from the voice database 106. In order to transmit the original speaker's voice cleanly, it is necessary to remove or reduce ambient noise and echo. The voice filter 108 filters all signals except the speaker's voice characteristic signal in the second local voice message to obtain the original voice emitted by the speaker. For example, the voice filter 108 is a Kalman filter, which uses the speaker's voice model and the ambient noise model to filter the noise (ambient noise and echo) from the local audio signal, so as to provide the filtered signal to the receiver's communication devices 100, 100a, 100b, ..., 100c. Through the acquisition of the voice recognizer 104 of the transmitting end and the noise filtering by the voice filter 108, the original voice signal of the speaker is then wirelessly or wired transmitted to the communication device of the receiver through the wireless transmission device 112 and/or the network transmission device 120. Therefore, in the receiver's communication device, through the conversion of the analog-to-digital converter 122, the original voice emitted by the speaker can be made from the speaker 116. For example, the speaker voice model stored in the voice database 106 can be received from a remote server or remote device through the wireless transmission device 112 and/or the network transmission device 120. For example, the voice database 106 may also be stored in the storage device 114.

As shown in Fig. 3, a communication conference is held among plurality of communication devices 100, 100a, 100b, ..., 100c. In another embodiment, after receiving the first local sound message by the voice receiver 110 of the communication device 100 at the transmitting end, it does not recognize the local sound message received by the voice receiver 110, which directly wirelessly or wired transmits the first local sound message to the receiver's communication device through the wireless transmission device 112 and/or the network transmission device 120. Then, the receiver's communication devices 100a, 100b, ..., 100c process the first local sound message received by the voice receiver 110 of the speaker's communication device 100. In the receiver's communication device, the voice receiver 110 is coupled to the voice database 106, and the voice characteristics of the speaker can be captured and recognized through the voice recognizer 104. Through the processing of the control device 102, the voice characteristics of the speaker are stored in a voice database 106. The voice database 106 stores the preset voice characteristics of the speaker. When the conference is established, the receiving end communication device receives the second local sound message from the transmitting end communication device 100, wherein the second local sound message includes the voice of the speaker. Through the processing of the control device 102 of the communication device at the receiving end, the second local voice message is compared with the voice characteristics of the speaker in the voice database 106. In order to transmit the speaker's original voice cleanly, it is necessary to reduce ambient noise and echo. The voice filter 108 filters all signals except the voice characteristic signal of the speaker in the second local voice message to obtain the original voice emitted by the speaker. For example, the voice filter 108 is a Kalman filter, which uses the speaker's voice model and the environmental noise model to filter the noise (environmental noise and echo) from the local audio signal. Therefore, through the conversion of the analog-to-digital converter 122, the original voice emitted by the speaker is output through the speaker 116 of the second communication device. In this embodiment, the voice characteristics (speaker's voice model) of the speaker of the voice database 106 of the receiving communication devices 100a, 100b, ..., 100c can be received from the transmitting communication device 100 through the wireless transmission device 112 and/or the network transmission device 120. For example, the voice database 106 of the receiving end communication device may also be stored in the storage device 114.

The voice characteristics of the speaker (speaker's voice model) of the voice database 106 can be received through the wireless transmission device 112 and/or the network transmission device 120. In one example, the voice characteristics of the speaker (speaker's voice model) are set in the application (APP) 118 and transmitted externally to the wireless transmission device 112 and/or the network transmission device 120 through a wireless or wired network. The voice database 106 is integrated into the APP 118. For example, the wireless networks include various wireless specifications such as Bluetooth, WLAN or WiFi. In one embodiment, the voice recognition APP on the communication device 100 controls the opening or closing of the noise elimination function to achieve the best effect of noise elimination.

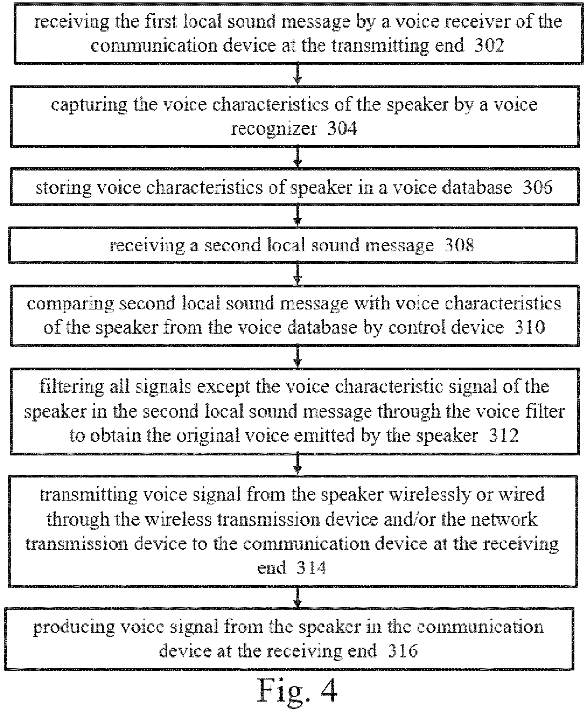

As shown in Fig. 4, it is a flow diagram of a method of noise reduction for intelligent network communication according to an embodiment of the present invention. In the method of noise reduction for intelligent network of an embodiment, a communication system includes a plurality of communication devices 100, 100a, 100b, ..., 100c for one-party or multi-party video conference. The method of noise reduction for intelligent network communication includes the following steps. First, in the step 302, the first local sound message is received by the voice receiver 110 of the communication device 100 at the transmitting end. The sound message includes the sound emitted by the speaker, ambient noise and echo, and the voice receiver 110 receives these audio signals. Then, in the step 304, the voice characteristics (models or features) of the speaker is captured by the voice recognizer 104. Next, in the step 306, the voice characteristics of the speaker are stored in a voice database 106. Subsequently, in the step 308, a second local sound message is received by the voice receiver, wherein the second local sound message includes the voice of the speaker. In the following step 310, the control device 102 compares the second local sound message with the voice characteristics of the speaker from the voice database 106. Then, in the step 312, all signals except the voice characteristic signal of the speaker in the second local sound message are filtered through the voice filter 108 to obtain the original voice emitted by the speaker. Next, in the step 314, the voice signal from the speaker is transmitted wirelessly or wired through the wireless transmission device 112 and/or the network transmission device 120 to the communication device at the receiving end. Finally, in the step 316, the voice signal from the speaker is produced in the receiving end communication device. Through the conversion of the analog-to-digital converter 122, the original voice emitted by the speaker is sounded (issued) from the speaker 116. For example, the analog-to-digital converter 122 may be built-in or external to the control device 102.

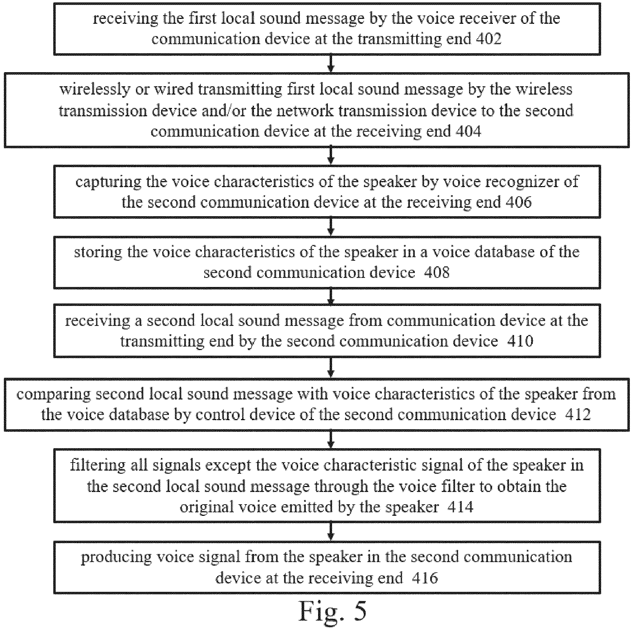

As shown in Fig. 5, it is a flow diagram of a method of noise reduction for intelligent network communication according to another embodiment of the present invention. In this embodiment, after the voice receiver 110 of the transmitting end communication device 100 receives the local sound message, it does not recognize the local sound message received by the voice receiver 110, which is recognized by the receiving end communication device. In the method of noise reduction for intelligent network of an embodiment, a communication system includes a plurality of communication devices 100, 100a, 100b, ..., 100c for one-party or multi-party video conference. The method of noise reduction for intelligent network communication includes the following steps. First, in the step 402, the first local sound message is received by the voice receiver 110 of the communication device 100 at the transmitting end. The first sound message includes the sound emitted by the speaker, ambient noise and echo, and the voice receiver 110 receives these audio signals. Then, in the step 404, the first local sound message is wirelessly or wired transmitted by the wireless transmission device 112 and/or the network transmission device 120 to the second communication device (100a, 100b, 100c) at the receiving end. Next, in the step 406, the voice characteristics (models or features) of the speaker are captured by the voice recognizer 104 of the second communication device at the receiving end. In the following step 408, the voice characteristics of the speaker are stored in a voice database of the second communication device. Subsequently, in the step 410, a second local sound message from the communication device 100 at the transmitting end is received by the second communication device, wherein the second local sound message includes the voice of the speaker. Then, in the step 412, the second local sound message is compared with the voice characteristics of the speaker from the voice database 106 by the control device 102 of the second communication device at the receiving end. Next, in the step 414, all signals except the voice characteristic signal of the speaker in the second local sound message are filtered through the voice filter 108 of the second communication device at the receiving end to obtain the original voice emitted by the speaker. Finally, in the step 416, the voice signal sent by the speaker is produced in the second communication device at receiving end. Through the conversion of the analog-to-digital converter 122, the original voice emitted by the speaker is sounded from the speaker 116. For example, the analog-to-digital converter 122 may be built-in or external to the control device 102.

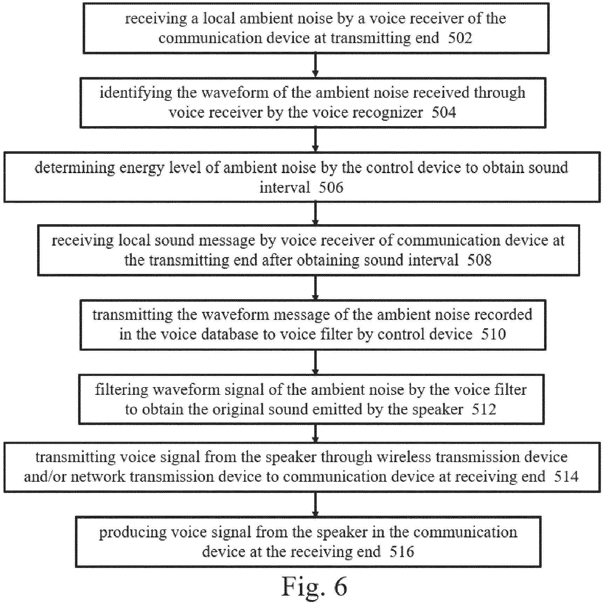

As shown in Fig. 6, it is a flow diagram of a method of noise reduction for intelligent network communication according to yet another embodiment of the present invention. In the method of noise reduction for intelligent network of an embodiment, a communication system includes a plurality of communication devices 100, 100a, 100b, ..., 100c for one-party or multi-party video conference. In this embodiment, background noise is filtered by sound interval method. The method of noise reduction for intelligent network communication includes the following steps. First, in the step 502, a local ambient noise message is received by the voice receiver 110 of the communication device 100 at the transmitting end. Then, in the step 504, the waveform of the ambient noise received through the voice receiver 110 is identified by the voice recognizer 104 and recorded in the voice database 106. Next, in step 506, the control device 102 determines energy level of the ambient noise to obtain a sound interval. For example, the energy level of the ambient noise is determined based on an average value of sound decibel (dB). When the sound energy is less than a preset average sound dB threshold, a sound interval is obtained. In the following step 508, the local sound message is received by the voice receiver 110 of the communication device 100 at the transmitting end after obtaining the sound interval. The sound message includes the sound emitted by the speaker and ambient noise, and the voice receiver 110 receives these audio signals. Next, in the step 510, the waveform message of the ambient noise recorded in the voice database 106 is transmitted to the voice filter 108 by the control device 102. Then, in the step 512, the waveform signal of the ambient noise is filtered out by the voice filter 108 to obtain the original voice emitted by the speaker. Subsequently, in the step 514, the voice signal from the speaker is transmitted wirelessly or wired through the wireless transmission device 112 and/or the network transmission device 120 to the communication device at the receiving end. Finally, in the step 516, the voice signal from the speaker is produced in the receiving end communication device. Through the conversion of the analog-to-digital converter 122, the original voice emitted by the speaker is sounded through the speaker 116. For example, the analog-to-digital converter 122 may be built-in or external to the control device 102.

The communication devices 100, 100a, 100b, ..., 100c are configured to communicate with external devices, which may be external computing devices, computing systems, mobile devices (smart phones, tablets, smart watches), or other types of electronic devices.

External devices include computing core, user interface, Internet interface, wireless communication transceiver and storage device. The user interface includes one or more input devices (e.g., keyboard, touch screen, voice input device), one or more audio output devices (e.g., speaker) and/or one or more visual output devices (e.g., video graphics display, touch screen). The Internet interface includes one or more networking devices (e.g., wireless local area network (WLAN) devices, wired LAN devices, wireless wide area network (WWAN) devices). The storage device includes a flash memory device, one or more hard disk drives, one or more solid-state storage devices and/or cloud storage devices.

The computing core includes processors and other computing core components. Other computing core components include video graphics processors, memory controllers, main memory (e.g., RAM), one or more input/output (I/O) device interface modules, input/output (I/O) interfaces, input/output (I/O) controllers, peripheral device interfaces, one or more USB interface modules, one or more network interface modules, one or more memory interface modules, and/or one or more peripheral device interface modules.

The external device processes the data transmitted by the wireless transmission device 112 and/or the network transmission device 120 to produce various results.

As will be understood by persons skilled in the art, the foregoing preferred embodiment of the present invention illustrates the present invention rather than limiting the present invention. Having described the invention in connection with a preferred embodiment, modifications will be suggested to those skilled in the art. Thus, the invention is not to be limited to this embodiment, but rather the invention is intended to cover various modifications and similar arrangements included within the spirit and scope of the appended claims, the scope of which should be accorded the broadest interpretation, thereby encompassing all such modifications and similar structures. While the preferred embodiment of the invention has been illustrated and described, it will be appreciated that various changes can be made without departing from the spirit and scope of the invention.

## Claims

1. A method of noise reduction for an intelligent network communication, **characterized by** comprising:
receiving a first local sound message by a voice receiver (110) of a communication device (100) at a transmitting end, wherein said first sound message includes a voice emitted by a speaker;
capturing voice characteristics of said speaker by a voice recognizer (104);
storing said voice characteristics of said speaker in a voice database (106);
receiving a second local sound message by said voice receiver (110), wherein said second local sound message includes said voice of said speaker;
comparing said second local sound message with said voice characteristics of said speaker stored in said voice database (106) by a control device (102); and
filtering all signals except said voice characteristic of said speaker in said second local sound message by a voice filter (108) to obtain an original voice emitted by said speaker.

2. The method of claim 1, further comprising transmitting a voice signal from said speaker through a wireless transmission device (112) and/or a network transmission device (120) to a second communication device (100a, 100b, 100c) at a receiving end.

3. The method of claim 2, further comprising issuing said original voice emitted by said speaker by a conversion of an analog-to-digital converter (122).

4. The method of claim 1, wherein said voice characteristics of said speaker are set in an application (118).

5. A method of noise reduction for an intelligent network communication, **characterized by** comprising:
receiving a first local sound message by a voice receiver (110) of a first communication device (100) at a transmitting end, wherein said first sound message includes a voice emitted by a speaker;
transmitting said first local sound message by a wireless transmission device (112) and/or a network transmission device (120) to a second communication device (100a, 100b, 100c) at a receiving end;
capturing voice characteristics of said speaker by a voice recognizer (104) of said second communication device (100a, 100b, 100c) at said receiving end;
storing said voice characteristics of said speaker in a voice database (106) of said second communication device (100a, 100b, 100c);
receiving a second local sound message by said second communication device (100a, 100b, 100c), wherein said second local sound message includes said voice of said speaker;
comparing said second local sound message with said voice characteristics of said speaker by a control device (102) of said second communication device (100a, 100b, 100c); and
filtering all signals except said voice characteristic of said speaker in said second local sound message by a voice filter (108) of said second communication device (100a, 100b, 100c) to obtain an original voice emitted by said speaker.

6. The method of claim 5, wherein said voice characteristics of said speaker are set in an application (118).

7. The method of claim 5, further comprising issuing said original voice emitted by said speaker by a conversion of an analog-to-digital converter (122) in said second communication device (100a, 100b, 100c).

8. A method of noise reduction for an intelligent network communication, **characterized by** comprising:
receiving a local ambient noise by a voice receiver (110) of a communication device (100) at a transmitting end;
identifying a waveform of said ambient noise received through said voice receiver (110) by a voice recognizer (104);
determining an energy level of said ambient noise by a control device (102) to obtain a sound interval;
receiving a local sound message by said voice receiver (110) of said communication device (100) at said transmitting end after obtaining said sound interval; and
filtering waveform signal of said ambient noise by a voice filter (108) to obtain an original sound emitted by said speaker.

9. The method of claim 8, wherein said energy level of said ambient noise is determined based on an average value of sound decibel by said control device (102), when said average value of sound decibel is less than a preset threshold, said sound interval is obtained.

10. The method of claim 8, further comprising transmitting a voice signal from said speaker through a wireless transmission device (112) and/or a network transmission device (120) to a second communication device (100a, 100b, 100c) at a receiving end, producing said voice signal from said speaker in said second communication device (100a, 100b, 100c) at said receiving end, and issuing said original voice emitted by said speaker by a conversion of an analog-to-digital converter (122).

## Amended claims

### Amended claims in accordance with Rule 137(2) EPC.

1. (Current Amendment) A method of noise reduction for an intelligent network communication, **characterized by** comprising:
receiving a first local sound message by a voice receiver (110) of a communication device (100) at a transmitting end, wherein said first sound message includes a voice emitted by a speaker, ambient noise and echo;
capturing voice characteristics of said speaker by a voice recognizer (104) including a voice feature extractor (104a), a data preprocessor (104b) and a classifier (104c),;
storing said voice characteristics of said speaker in a voice database (106);
receiving a second local sound message by said voice receiver (110), wherein said second local sound message includes said voice of said speaker, ambient noise and echo;
comparing said second local sound message with said voice characteristics of said speaker stored in said voice database (106) by a control device (102); and
filtering said ambient noise and said echo from said second local sound message by a voice filter (108) to obtain an original voice emitted by said speaker.

2. (Original) The method of claim 1, further comprising transmitting a voice signal from said speaker through a wireless transmission device (112) and/or a network transmission device (120) to a second communication device (100a, 100b, 100c) at a receiving end.

3. (Original) The method of claim 2, further comprising issuing said original voice emitted by said speaker by a conversion of an analog-to-digital converter (122).

4. (Original) The method of claim 1, wherein said voice characteristics of said speaker are set in an application (118).

5. (Current Amendment) A method of noise reduction for an intelligent network communication, **characterized by** comprising:
receiving a first local sound message by a voice receiver (110) of a first communication device (100) at a transmitting end, wherein said first sound message includes a voice emitted by a speaker, ambient noise and echo;
transmitting said first local sound message by a wireless transmission device (112) and/or a network transmission device (120) to a second communication device (100a, 100b, 100c) at a receiving end;
capturing voice characteristics of said speaker by a voice recognizer (104), including a voice feature extractor (104a), a data preprocessor (104b) and a classifier (104c), of said second communication device (100a, 100b, 100c) at said receiving endthrough extracting a plurality of feature values of said voice of said speaker by said voice feature extractor (104a), performing normalized calculations based on said plurality of feature values of said voice by said data preprocessor (104b) as classification information of said voice recognizer (104), and classifying by said classifier (104c) classifies said voice of said speaker into several different types of voice characteristics based on said classification information;
storing said voice characteristics of said speaker in a voice database (106) of said second communication device (100a, 100b, 100c);
receiving a second local sound message by said second communication device (100a, 100b, 100c), wherein said second local sound message includes said voice of said speaker, said ambient noise and said echo;
comparing said second local sound message with said voice characteristics of said speaker by a control device (102) of said second communication device (100a, 100b, 100c); and
filtering said ambient noise and said echo from said second local sound message by a voice filter (108) of said second communication device (100a, 100b, 100c) to obtain an original voice emitted by said speaker.

6. (Original) The method of claim 5, wherein said voice characteristics of said speaker are set in an application (118).

7. (Original) The method of claim 5, further comprising issuing said original voice emitted by said speaker by a conversion of an analog-to-digital converter (122) in said second communication device (100a, 100b, 100c).

8. (Withdraw) A method of noise reduction for an intelligent network communication, **characterized by** comprising:
receiving a local ambient noise by a voice receiver (110) of a communication device (100) at a transmitting end;
identifying a waveform of said ambient noise received through said voice receiver (110) by a voice recognizer (104);
determining an energy level of said ambient noise by a control device (102) to obtain a sound interval;
receiving a local sound message by said voice receiver (110) of said communication device (100) at said transmitting end after obtaining said sound interval; and
filtering waveform signal of said ambient noise by a voice filter (108) to obtain an original sound emitted by said speaker.

9. (Withdraw) The method of claim 8, wherein said energy level of said ambient noise is determined based on an average value of sound decibel by said control device (102), when said average value of sound decibel is less than a preset threshold, said sound interval is obtained.

10. (Withdraw) The method of claim 8, further comprising transmitting a voice signal from said speaker through a wireless transmission device (112) and/or a network transmission device (120) to a second communication device (100a, 100b, 100c) at a receiving end, producing said voice signal from said speaker in said second communication device (100a, 100b, 100c) at said receiving end, and issuing said original voice emitted by said speaker by a conversion of an analog-to-digital converter (122).
